# EUROPEAN PATENT APPLICATION

(11) **EP 0 617 424 A1**
(43) Date of publication of application: **28.09.1994**
(21) Application number: 93118652.2
(22) Date of filing: 19.11.1993
(51) Int. Cl.: G11B 21/00, G11B 5/48, G11B 5/49, G11B 19/04, G11B 7/14, G11B 20/18

(54) **Head system suitable for magnetic or optical high-density recording devices**

(30) Priority: 26.03.1993 US 37903
(71) Applicant: Tandberg Data Storage AS, 0411 Oslo (NO)
(72) Inventor: Solhjell, Erik, N-01477 Oslo 8 (NO); Guttorm, Rudi, N-01477 Fjellhamar (NO); Pahr, Per Olaf, N-3400 Lier (NO); Strand, Steinar J., N-1405 Langhus (NO)
(74) Representative: Goddar, Heinz J., Dr.

(57) **Abstract**

A head assembly is disclosed for use in a system for optically or magnetically recording data on a data storage medium in a number of successively recorded, adjacent data tracks, and for reading the recorded data from the storage medium, wherein the head assembly and the data storage medium are movable relative to each other along a transport direction substantially parallel to the data tracks. The head assembly has a carrier with at least one write head mounted thereon and having a center line extending substantially parallel to the transport direction, and at least one read head also mounted on the carrier and having a center line extending substantially parallel to the transport direction. The center line of the read head is offset from the center line of the write head in a direction substantially perpendicular to the transport direction by a distance which is selected for causing the read head to read data from a data track adjacent a data track in which data is currently being written by the write head in the same pass with the writing of the data by the write head. This permits virtually immediate detection of overwriting of the data by the write head onto the adjacent data track.

## Description

### BACKGROUND OF THE INVENTION

### Field of the Invention

The present invention is directed to a head system, having at least one write head and at least one read head mounted on a carrier, for use in high-density recording devices wherein data is magnetically or optically stored in adjacent data tracks, with the data tracks being successively recorded, and wherein the head system and the storage medium are relatively movable.

### Description of the Prior Art

Designers of data storage systems, such as magnetical or optical disk or tape storage systems, are continuously seeking ways to increase the data storage capabilities within the confines of a given system. Normally, if the area available for recording data is fixed, the storage capacity is increased either by increasing the linear bit density (flux density) or the track density (number of recorded tracks per mm or per inch) or a combination of both. Given a choice, the designer will usually choose to increase the track density, rather than increasing the linear bit density. This is because the signal-to-noise ratio (S/N) is reduced linearly by an increase in track density, but is reduced exponentially with an increase in bit density.

Increasing the track density, however, may present other problems making this choice more difficult to implement in a practical system. For example, in a magnetic tape system such as those based on quarter inch tape cartridges (QIC), the practical number of tracks recorded longitudinally (along the length of the tape in the tape transport direction) has been very low, normally less than 30 tracks. Recently, some improvements have permitted an increase in the number of tracks to slightly above 40.

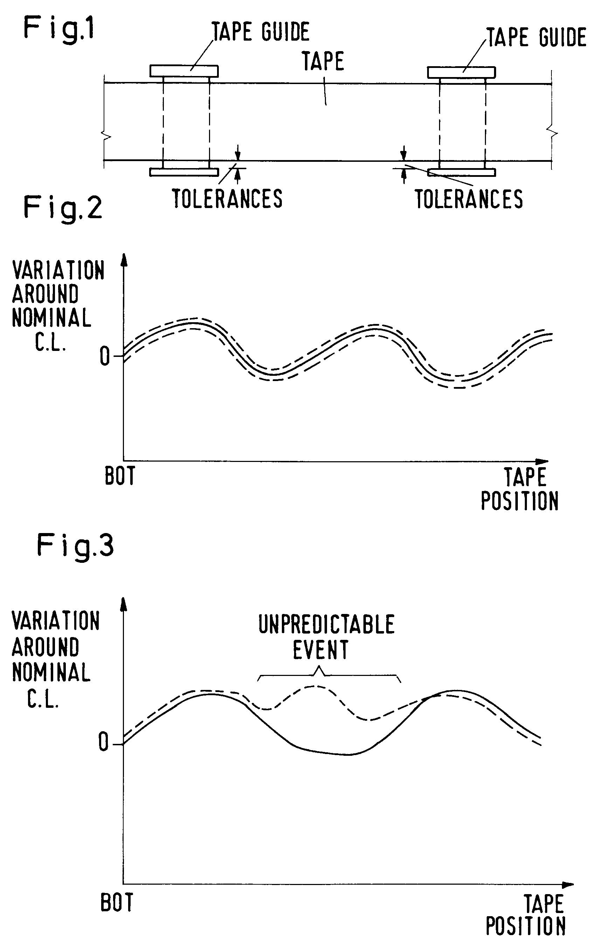

In a tape system such as the QIC cartridge, one of the limiting factors for higher track densities is the precision and the repeatability of the tape position as the tape moves relative to the write/read head assembly, often at very high speeds The tape is manufactured from a sheet of material which is then cut (slitted) to produce strips which will form the magnetic tape. Such slitting is done with very tight tolerances. While running, the tape is maintained in place in a direction perpendicular to its transport direction by tape guides, schematically shown in Figure 1. Due to tolerances in the tape width arising during the manufacture thereof, and tolerances in the tape guides, the tape may nonetheless be able to travel slightly up or down (i.e., perpendicularly to its transport direction) from its correct or specified position while it is running. Expensive tape systems often use tape guides wherein at least some of the guides are spring-loaded to maintain the tape in a more stable position. In lower cost systems, such as QIC cartridges and commercial tape cassette systems, the use of such expensive guides is not economically justifiable, and therefore the tape position in such systems will vary to a greater extent.

It is also known to provide systems with an embedded servo control, wherein servo information is prerecorded on the storage medium. This is used quite extensively in magnetic disks, but to a far lesser extent in tape drives, due to the added complexity and cost. For many tape systems, it has been observed that the tape position perpendicularly to its transport direction may vary to a relative large extent as the tape is running, however, this variation is more or less repeatable. For example, Figure 2 schematically indicates the manner by which the actual center of a tape may vary as the tape is running (solid line). In many cases, the tape position will follow a form of sine curve over time. if a track is recorded during this tape run, it will follow this curve. If the tape movement is repeated, and a system is provided to detect the position of the recorded track, tests at Tandberg Data A/S have shown that for many systems, the tape position variation is repeated with a high degree of accuracy. For a given system, the combination of components and tolerances results in a transverse tape movement which is repeatable, and thus to a large extent predictable. This is indicated in Figure 2 by the dashed lines, indicating a smaller range of variation around the "actual" position indicated by the solid line.

Due to this repeatability, it is possible to design tape systems with a fairly high track density, because although the instantaneous position of the tape itself may vary to relatively large extent as it runs from one end to the other, the important parameter is how much of this variation is not repeatable. A typical QIC tape cartridge, for example, has a specified track variation (non-repeatability) of ±0.0005 inches (± 0.0127 mm). Referring to Figure 2, such a variation would be well within the area bounded by the dashed lines, although the instantaneous actual position of the tape may vary two or three times as much as the tape is transported.

In addition to this track repeatability variation, which is to a certain extent predictable, the edges of the tape may be worn or damaged, or the tape drive may receive a mechanical shock due to being hit while the tape is running. These further factors may result in unexpected, and in some cases fairly large and abrupt, variations in the tape position. A typical curve for the repeatability of a recorded track during read back is shown in Figure 3 exhibit such a sudden variance due to a shock or due to a certain portion of the tape being mechanically damaged.

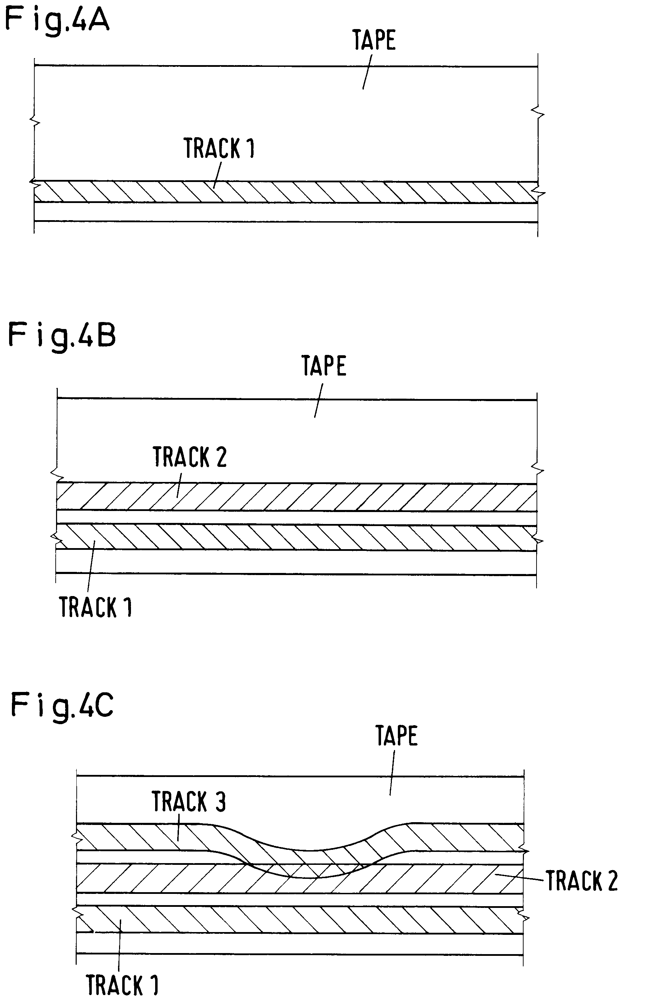

The problem facing the drive system designer is that variations of this type are not well-known and cannot be predicted. In most cases they are very rare, however, when such unusual variations occur, the consequence may be that valuable data is overwritten and lost. This is particularly important in those types of systems wherein the recording of data tracks is undertaken sequentially in steps from track-to-track. This recording technique is schematically shown in Figure 4, wherein it is assumed that data track 1 is recorded first, followed by recording data track 2, then recording data track 3, etc. Figure 4A shows the situation with only data track 1 being recorded. The rest of the tape area is unrecorded (blank). Figure 4B shows the situation after data track 2 has been recorded, assuming that data track 2 was recorded in its nominal position, with a small guardband between the tracks. Figure 4C shows the situation after data track 3 has been recorded. In this case it is assumed that the tape drive received a shock, or that the edge of the tape was damaged over a certain distance. This has resulted in an abnormal, rapid change in the tape position in this region, and track 3 has therefore, in this region, partially overwritten previous recorded track 2. Depending on how much of data track 2 is overwritten, this situation may or may not cause a complete loss of the data on this portion of track 2.

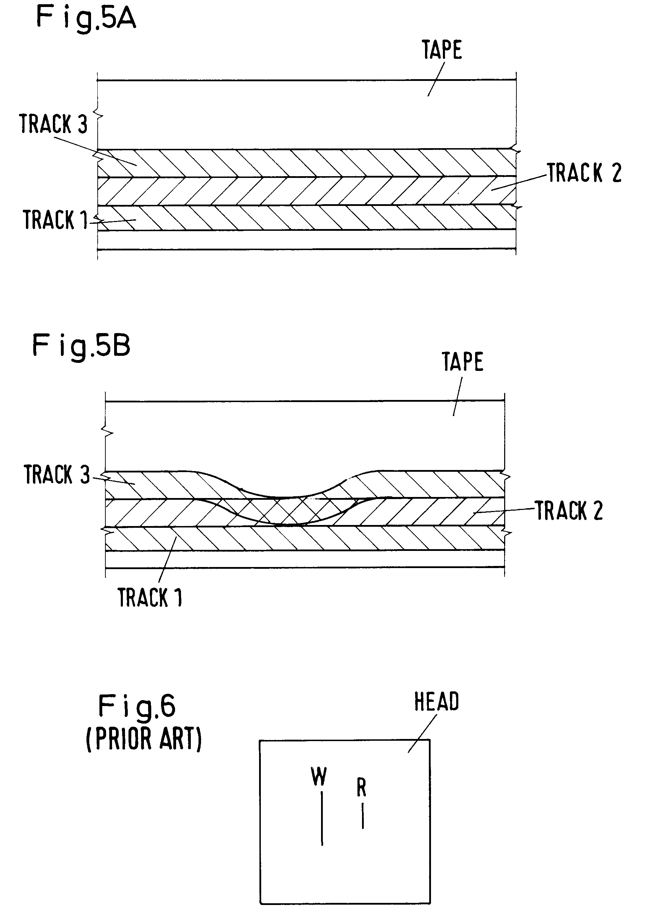

The newest high-density drives often record with no guardbands at all, in an effort to further increase track density. Some drives are even designed to intentionally partially overwrite the adjacent track, leaving only a small portion of the previously recorded track readable. This is shown in Figure 5. In Figure 5, tracks 1, 2 and 3 are recorded one at time, such that track 2 party overwrites track 1, track 3 partially overwrites track 2, etc. The system is designed so that the remaining (non-overwritten) portions of the track are readable, even given the normal tape track position variations noted above.

Should such a drive system receive a severe shock during operation, or should the tape edge be severely damaged, a non-specified and unpredictable tape track off-center movement may occur, which in the worst case may cause the entire adjacent track to be overwritten in the region at which the excessive off-center movement occurs. This is shown in Figure 5B, wherein track 3 has completely overwritten track 2 along a section of the tape. Even with powerful error correction methods, such situations, even though rare, can result in a complete loss of a portion of the data.

The above description has primarily referred to tape as the recording medium, however, similar situations may arise with other media such as floppy disks or hard disks. Optical recording disks may also exhibit the same problem. For example, a disk in a notebook or laptop computer may be hit hard while writing on a track. This shock may cause the recording head momentarily to slide away from its correct position, and to beginning to overwrite a portion of the adjacent track, similar to that shown for tape systems in Figures 4 and 5. Again, this may result in a permanent loss of previously recorded data.

In high performance tape drives, it is common to immediately verify the recorded track by a technique known as Read-while-Write verification, or R-w-W. This has sometimes been referred to as Read-after-Write (R-a-W) because the verification must unavoidably take place after the data is recorded. As used herein, however, a R-w-W verification process will refer to systems wherein the verification process takes place during the same pass as the write operation, and almost immediately after each bit or byte of data has been recorded. The R-a-W technique will be used herein to refer to a system wherein the verification takes place on a subsequent read pass after the write pass.

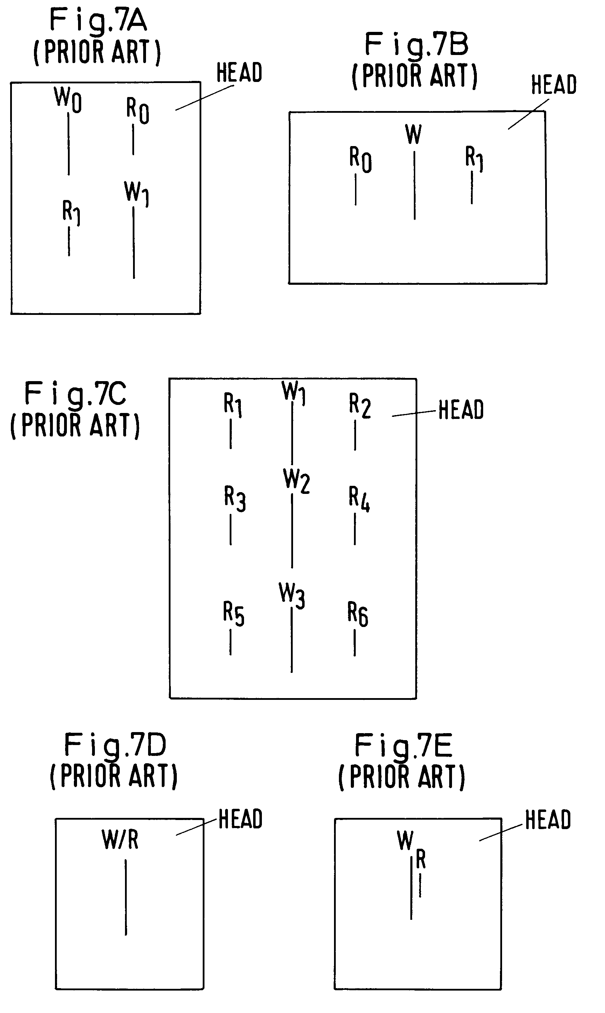

The head assemblies in such R-w-W systems have many configurations, but will always consist of at least one write element and at least one read element, normally placed fairly close together in the direction of tape transport, as shown in Figure 6. The data is continuously written with the write head W and is almost immediately verified with the read head R. Data which is detected as "not good" is normally rewritten further down the track.

Figures 7A through 7E show various examples of R-w-W head assemblies. The type shown in Figure 7A is used in many QIC heads. In Figure 7A, heads W₀ and R₀ are used for writing and reading in one direction, while heads W₁ and R₁ are used for writing and reading in the opposite direction of tape movement. In the version shown in Figure 7B, the write W is used for writing in both directions of tape movement, but read element R₀ is used for verification reading in one direction (when the tape moves from right to left) and read element R₁ is used for verification reading in the opposite direction. For read-only operation, either head may be used regardless of the direction of tape transport.

The version shown in Figure 7C is currently being introduced in QIC tape drives. This head has three channels, each in a read-write-read configuration, so that the head is capable of reading or writing on one, two or three tracks simultaneously.

Although R-w-W verification is a very robust and safe method for immediately verifying that the recorded data is good, it has the disadvantage of adding to the cost of the tape drive, by making the head assembly more expensive. In many types of systems, the added cost of a R-w-W verification cannot be justified. Therefore, many less expensive tape drives are being designed as R-a-W systems. As noted above, in such systems the head is designed so that a complete verification of data does not occur immediately after the data has been written, but instead the verification takes place in a subsequent read pass after the write pass.

Figures 7D and 7E show configurations designed for such a R-a-W operation. The head shown in Figure 7D is a single gap head, which can be used either for reading or writing, but cannot do both simultaneously. The version shown in Figure 7E is a dual gap head. In theory, since the head assembly has one gap for reading and one gap for writing, the version shown in Figure 7E could be used for a R-w-W verification, as long as the tape is moving in one direction (such as from left to right in the case of Figures 7E). In practice, however, the read and write elements in assemblies of the type shown in Figure 7E are normally placed so close together that crossfeed from the right element to the read element makes R-w-W verification impossible.

Many other head configurations are known which have been designed based on these basic configurations.

Disk systems have heretofore not relied on R-w-W verification because, due to the spinning of the disk, the recorded data will pass under the head again at the next rotation of the disk. Verification, if undertaken, can therefore be accomplished at the next rotation of the disk, i.e., after the disk rotates through approximately 360° following the writing of the data. Therefore, disk heads have conventionally been designed with configurations of the type shown in Figures 7D or 7E.

If a magnetic or optical disk is hit hard while it is writing, however, it may also move off-center for a short time. Depending on the disk construction, such a situation may result in a previously recorded data track being overwritten, with the overwritten data being lost.

### SUMMARY OF THE INVENTION

It is an object of the present invention to provide a head assembly, suitable for use in optical or magnetic data recording and storage systems, which is designed for a very high track density while simultaneously providing good protection against shock or other situations which may result in a non-predictable, off-center position of the head assembly and/or the storage media.

The above object is achieved in a head assembly having at least one write head mounted on a carrier and having a center line extending substantially parallel to the transport direction of the storage medium, which will also be substantially parallel to the data tracks thereon. At least one read head is also mounted on the carrier, the read head also having a center line extending substantially parallel to the transport direction of the storage medium. The center line of the read head is offset from the center line of the write head in a direction substantially perpendicular to the transport direction by a distance which is selected for causing the read head to read data from a data track which is adjacent to the data track in which data is currently being written by the write head in the same pass with the writing of data by the write head. This permits a virtually immediate detection of overwriting of data by the write head on the data in the adjacent data track.

If such unwanted overwriting occurs, one or more steps may be implemented. The write operation may be immediately stopped, or a flag can be recorded at the approximate location of the overwritten data to identify that location as a possible area where data has been lost, or an alarm may simply be generated indicating to a person monitoring the write process that an undesired overwriting has occurred. Immediately, or at subsequent convenient time, the overwritten region can then be reviewed to determine the extent of data loss. If the overwriting is not too severe, the data may be recovered by known techniques, or the date may be rewritten if a complete loss has occurred.

### DESCRIPTION OF THE DRAWINGS

Figure 1, as noted above, shows a tape in tape guides in a conventional drive system.

Figure 2, as noted above, illustrates the variation in tape movement in a conventional system in a direction perpendicular to the direction of tape transport.

Figure 3, as noted above, shows the effect of an abnormal off-center movement of the tape caused by a mechanical shock to a drive system.

Figures 4A, 4B and 4C, as noted above, illustrate a typical sequence of data track recording, with one of the tracks being partially overwritten on another.

Figures 5A and 5B, as noted above, illustrate a typical high-density recording format, with one track being overwritten on another.

Figures 6, as noted above, schematically shows a typically write/read head for read-while-write verification.

Figures 7A through 7C, as noted above, show various configurations for heads employed in read-while-write verification, and Figures 7D and 7E schematically show head configurations for read-after-write verification.

Figure 8 is a schematic representation of a head system constructed in accordance with the principles of the present invention.

Figures 9A and 9B schematically illustrate the recording and verification of data in a drive system employing a head system constructed in accordance with the principles of the present invention.

Figure 9C shows a further embodiment of a head system constructed in accordance with the principles of the present invention, showing the positioning of the read elements relative to the data tracks in a drive system.

Figure 9D is a schematic representation of a further embodiment of a head system constructed in accordance with the principles of the present invention.

Figure 10 is a schematic representation of sequentially recorded data tracks on a tape wherein one data track has overwritten two other data tracks, due to a severe mechanical shock to the drive.

Figure 11 is a schematic representation of a head system constructed in accordance with the principles of the present invention, for use in a drive susceptible to extremely high mechanical shocks.

Figure 12 is a schematic representation of an embodiment of a head system constructed in accordance with the principles of the present invention for systems wherein writing takes place in both directions of tape transport.

Figure 13 is a schematic representation of a further embodiment of a head system constructed in accordance with the principles of the present invention formed by a doubling of the elements of the embodiment of Figure 8.

Figure 14 is a schematic representation of a further embodiment of a head system constructed in accordance with the principles of the present invention, which is a variation of the embodiment of Figure 13.

Figure 15 is schematic representation of a further embodiment of a head system constructed in accordance with the principles of the present invention.

Figure 16 is a schematic representation of an embodiment of a head system constructed in accordance with the principles of the present invention, which is an enhanced version of the embodiment of Figure 13, using the configuration shown in Figure 15.

Figure 17 is a schematic representation of a head system constructed in accordance with the principles of the present invention for writing in both directions, based on the configuration shown in Figure 14.

Figure 18 shows an embodiment with specified dimensions for use in a system wherein one track is intentionally partially overwritten on the adjacent track, given a track width as is currently employed in the art.

Figure 19 shows an embodiment where the distance between the write and read heads use two times the track pitch, 2 d_{c}.

### DESCRIPTION OF THE PREFERRED EMBODIMENTS

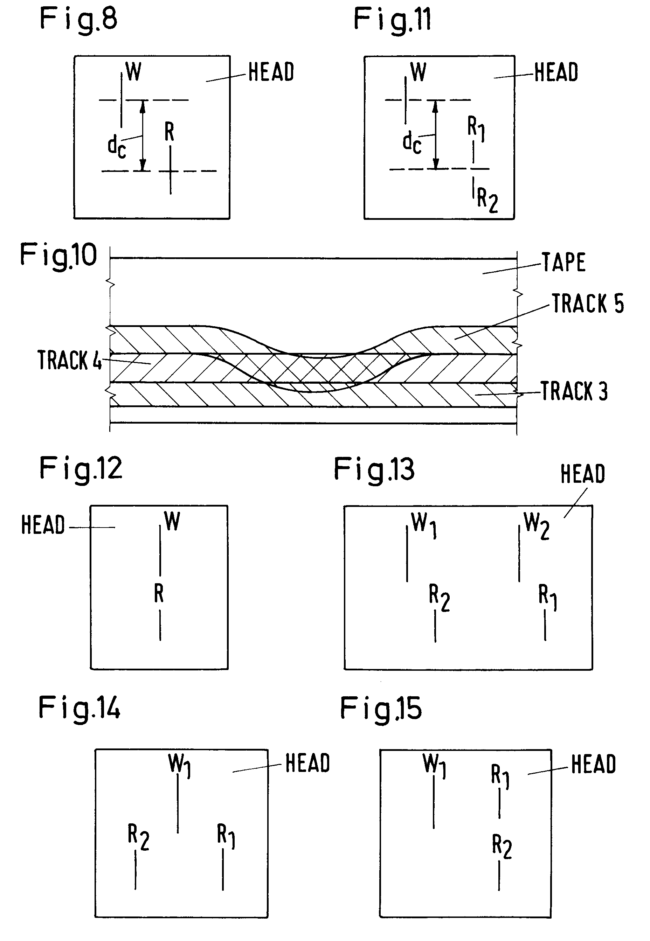

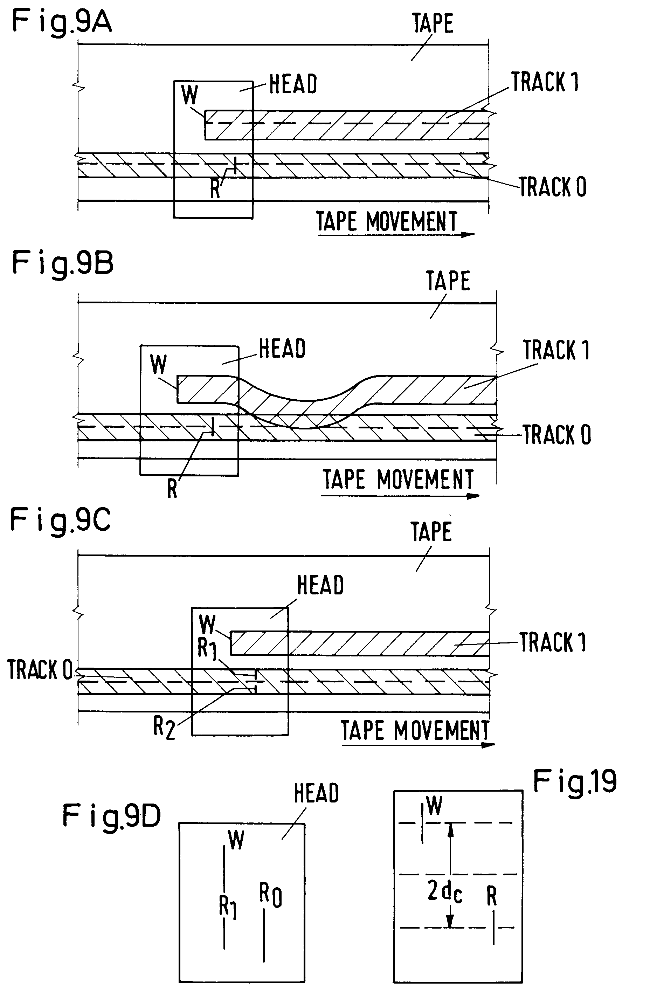

The basic head configuration of a head assembly constructed in accordance with the principles of the present invention is shown in Figure 8. This configuration includes a write element W and a read element R, in an embodiment designed for use in a tape drive system. The center line of the read element R, in a direction parallel to the direction of tape transport in the system, and thus also parallel to the recorded and yet-to-be recorded data tracks, is offset from the center line of the write element W by a distance d_{c}. The distance d_{c} is calculated so that it will follow the nominal center line of the preceding recorded track while a current track is being recorded. This is shown in Figure 9A, wherein the write element W is writing track 1, while the read element R is reading date recorded on the previously recorded track 0. Since the writing and reading are taking place substantially simultaneously, but on different tracks instead of on the same track, the invention constitutes a new type of configuration which may be thought of as "between" a R-w-W system and a R-a-W system. The distance d_{c} can also be so chosen that read element R follows the next nearest track, see Figure 19.

An important feature of the head configuration of the invention, as exemplified in Figure 8, is that if the drive is subjected to mechanical shock, such as by being hit, or if the recording medium or the recording head makes a non-predictable, off-center movement, so that a portion of the previously recorded data track is severely overwritten, this will be immediately detected by verifying read element R. Necessary actions can be undertaken, possibly automatically, by the drive, such as rewriting the last two tracks or warning the user of a potential problem. It is also possible for the read system to verify how much of the previously recorded track was destroyed (overwritten) and to calculate whether this data can be reconstructed using known ECC (Error Correction Characters). Therefore, using the head configuration of the type shown in Figure 8, the system will be capable not only of detecting that a previously recorded data track is being overwritten, but also can determine whether the overwriting is so sever that it cannot be corrected by the built-in ECC system (if any). If correction cannot take place using the recorded data, the drive must either warn the user that such a situation has occurred, or must automatically reposition either the head or the tape to the point immediately preceding the point at which data destruction began.

Figure 9B shows a situation wherein the tape or the head has made a non-specified, off-center movement so that track 0 is severely overwritten. This will be detected by the read element R, because it reads track 0 after the write element W has recorded track one partially over track 0.

This verification technique operates satisfactorily when the storage medium (tape or disk) is moving away from the specified position, however, if the head is moving this means that both the read and write elements R and W will be moving simultaneously. For systems wherein this may be a problem, the basic head configuration shown in Figure 8 may be modified in several different ways. One such modification as shown in Figure 9C where in a head having two very narrow read elements R₁ and R₂ is employed, with the center line between the read elements R₁ and R₂ being offset in the direction perpendicular to the direction of tape transport from the center line of the write element W, in the manner described in connection with Figure 8. As shown in Figure 9C, the read element R₁ is positioned so that it covers the upper portion of the preceding track 0 (i.e., the track recorded immediately preceding the track being currently written), while read element R₂ covers the lower portion of track 0. Thus, if the head moves, one or both of the read heads R₁ and R₂ will lose data, and the system can be immediately warned so that overwriting does not occur. The configuration shown in Figure 9c will also be suitable for system wherein the medium (normally tape) may move while the head is stable.

It is also possible to design a system in accordance with the principles of the present invention wherein the read element R in Figure 8 is almost as wide as the write element, one version of such a modification of the invention is shown in Figure 9D, which includes a read element R₁ with the conventional narrow configuration in addition to a wider read element R₀. The read R₀ is used for a verification operation on the previous track, while the read element R₁ is used for normal read-only operation. It is also possible to design the read channel connected to the read element R₀ so that it requires a high signal level in order to accept the signal as being good. With such a wide read element R₀ and such a high amplitude requirement, the verification system will quickly detect any incorrect tape or head movement.

It is also important to note that the drive should turn off the write current immediately upon detection of an abnormal situation in the verification operation. By doing so, this will quickly reduce the damaged area so that it may still be possible to undertake corrections using ECC.

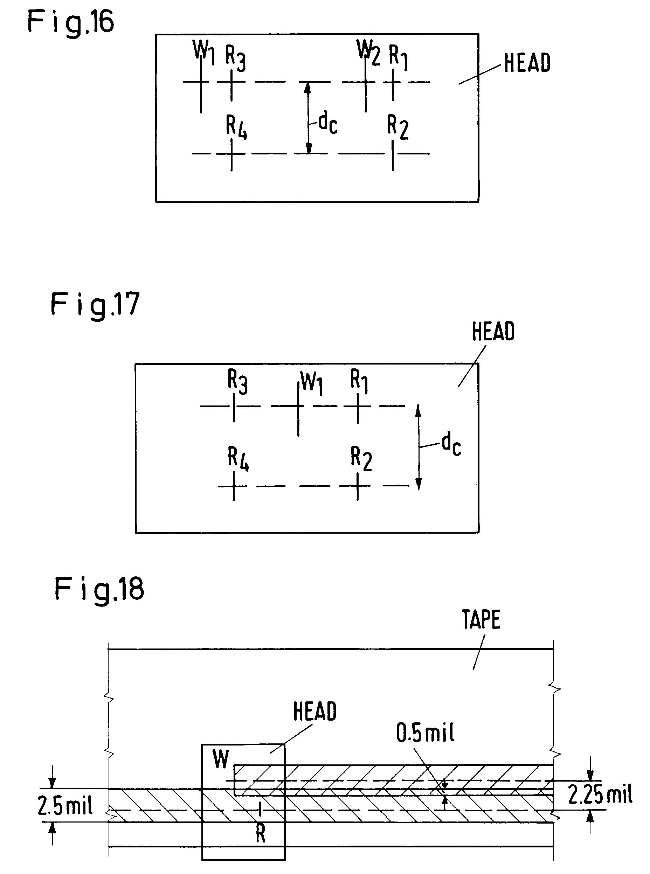

In theory, it is possible for the recording head to overwrite two or more tracks, at least partially. This is schematically indicated in Figure 10. Such a sever overwriting will normally occur only in drives having extremely high track densities, or drives mounted in systems which can he exposed to very high shocks. Figure 11 shows an embodiment of the invention for use in such systems. In the embodiment of Figure 11, two read elements are again employed, however, instead of operating on the same track, the read element R₁ reads (verifies) data on the track immediately preceding the track on which the write element W is currently writing data, and the read element R₂ reads (verifies) data on the track immediately preceding the track being read by the read element R₁. If the head assembly in the embodiment of Figure 11 were used with the track configuration shown in Figure 10, for example, the write element W would be writing track 5, while the read element R₁ is verifying track 4 (recorded immediately preceding track 5) and the read element R₂ is verifying track 3 (recorded immediately before track 4).

In the basic configuration shown in Figure 8, the read element R must read after the writing (recording) made by write element W in order to operate properly. Therefore, the configuration in the embodiment of Figure 8 will operate correctly only for a medium (disk or tape) moving from left to right in the drawing. This will be satisfactory for disk systems, and for tape systems designed to record only in one direction. If, for example, a tape is moving from right to left in Figure 8, the read element R will read data on the previously recorded track before the write element W has the possibility of overwriting (destroying) the verified area. Therefore, for systems intended to write in both directions, as in many current tape drives, further embodiments of the invention are needed.

One such embodiment intended for system wherein writing takes place in both directions is shown in Figure 12, wherein the write element W and the read element R are still offset, but are disposed so as to be aligned in a direction perpendicular to the direction of tape transport. This is a low cost solution, and as a compromise to the low cost embodies a certain degree of risk, because the read element R may or may not read data influenced by the write element W as the storage medium is moving. This will depend upon tolerances in the head design and other parameters. In drive systems wherein cost is a dominant factor, however, this amount of risk may be an acceptable solution. Again, the distance between the center line of the write element W and the center line of the read element R is equal to the nominal distance from the track being written to the nominal center line of the previously recorded track, or as shown in one of Tandberg Data's co-pending applications, equal to the distance to the next nearest track.

Another embodiment for use in systems wherein writing takes place in both directions is shown in Figure 13. In this embodiment, the two basic elements in the embodiment of Figure 8 are doubled. In the embodiment of Figure 13, a read element R₁ is used to verify the adjacent track, while the write element W₁ is writing and the medium is moving from left to right. When the storage medium is moving in the opposite direction, the write element W₂ is used for writing while the read element R₂ is used for reeding (verifying). For a read-only operation, either of the two elements R₁ or R₂ can be used to read the data.

A variation of the embodiment of Figure 13 is shown in Figure 14. In Figure 14, the assembly includes one write element W₁ and read elements R₁ and R₂. The write element W₁ is used for writing in both directions, while the read element R₁ is used for verification when the recording medium is moving from left to right, and the read element R₂ is used for verification when the medium is moving from right to left.

The embodiments of Figures 13 and 14 have the added feature of a reduced signal crossfeed between the active write element and the verifying read element. Although the invention is not limited to magnetic head assemblies, it is always a problem in a magnetic head assembly that the magnetic flux generated in the write element influences the signal read by the read element to a certain extent. A short distance between the write and read element usually aggravates this situation. The embodiments of Figures 13 and 14 permit a longer distance between the active read and write elements to be maintained, which reduces the crossfeed problems.

As noted above, the basic concept of the invention is a new type of head configuration which can be considered "between" a R-w-W configuration and a R-a-W configuration. The embodiments described thus far (i.e., the embodiments of Figures 8, 9, 11, 12, 13 and 14) therefore do not provide immediate R-w-W verification in the true sense. It is possible, however, to achieve R-w-W verification within the context of the invention. An embodiment for accomplishing this is shown in Figure 15. In this embodiment, the read element R₁ is used to provide immediate R-w-W verification on the track being recorded by the write element W₁, while the read element R₂ provides the verification of the adjacent track in the manner discussed above.

The embodiment of Figure 15 is intended for systems wherein the tape is intended to move in only one direction during a read operation. Figure 16 shows an embodiment based on Figure 13 which achieves the R-w-W verification of Figure 15. In the embodiment of Figure 16, when recording medium is moving from left to right, write element W₁ is used for writing and the read element R₁ is used for immediate read verification of the recorded track. Read element R₂ is used to verify that the adjacent track is not overwritten. When the tape direction is reversed, the writing is done by write element W₂, and the immediate read verification is done by read element R₃. Read element R₄ is used to verify that the adjacent track is not destroyed by overwriting.

For the reasons discussed in connection with Figure 9D above, the read elements R₂ and R₄ in the embodiment of Figure 16 may be designed differently, such as by having different widths, from the read elements R₁ and R₃, in order to operate most effectively as read verifying elements. For example, read elements R₂ and R₄ may be made as wide as the recorded track, or at least substantially as wide, and they may also be connected to a read channel requiring a very high amplitude signal. Additionally, read heads R₂ and R₄ may each be split into two read elements, as shown in Figure 9C.

A further version of the embodiments of Figure 16 is shown in Figure 17, which embodies the configuration shown in the embodiment of Figure 14. In the embodiment of Figure 17, write element W₁ is used for writing in both directions, while read elements R₁ and R₃ are used for R-w-W verifications in both directions and read elements R₂ and R₄ are used for verification of the previously recorded, adjacent tracks. Again, the physical size and design of the read elements R₂ and R₄ may vary as discussed above in connection with the embodiment of Figure 16.

The actual positions of the verification read elements will depend on the distance between the recorded tracks. In the case of very high-density recording, wherein the previously recorded track is intentionally partly overwritten (in a controlled manner), the offset d_{c} between the center line of the read element (or read elements) from the center line of the write element must be selected so that the read element or elements follow the nominal center line of the adjacent data track. This is shown in Figure 18. In this example, each recorded track is 2.5 mils (0.0025 inches, or 0.063 mm) in width, which is a typical track width as of the present time. The system is designed so that 0.5 mils of the previously recorded track is nominally overwritten when the adjacent track is recorded. Therefore, the remaining non-overwritten track width is 2.0 mils. The read element designed to verify the adjacent track should therefore be placed so that its center line is 2.25 mils from the center line of the write element (2.5/2 + 2.0/2 = 2.25 mils). Such a configuration with specified distances is shown in Figure 18. It is clear, however, that the embodiment of Figure 18 is but one example of such a configuration, and the actual numbers will vary dependent upon the design of each specific system. Embodiments based on Figure 19 can also be used.

Although a number of basic exemplary configurations of the read and write heads within the head system according to the invention have been described herein, it is apparent that those skilled in the art may provide other configurations without departing from the inventive concept disclosed herein. Such other configurations, for example, may be designed to record on more than one track at a time, which will be based on combinations of one or more of the head configurations shown herein.

Although other modifications and changes may be suggested by those skilled in the art, it is the intention of the inventors to embody within the patent warranted hereon all changes and modifications as reasonably and properly come within the scope of their contribution to the art.

## Claims

**1.** A head assembly for use in a system for recording data on a data storage medium in a plurality of successively recorded, adjacent data tracks and for reading the recorded data from said data storage medium, said head assembly and said data storage medium being movable relative to each other in successive passes along a transport direction substantially parallel to said data tracks, said head assembly comprising:
a carrier;
write head means, mounted on said carrier and having a center line extending substantially parallel to said transport direction, for recording said data on said storage medium;
read head means, mounted on said carrier and having a center line extending substantially parallel to said transport direction, for reading said recorded data from said storage medium; and
said center line of said write head means being offset from said center line of said write head means in a direction substantially perpendicular to said transport direction by a distance for causing said read head means to read said recorded data in a pass from a data track which is adjacent a data track in which data is currently being recorded in the same pass by said write head means for detecting overwriting of data by said write head means on said adjacent data track substantially immediately after said overwriting occurs.

**2.** A head assembly as claimed in claim 1 wherein said write head means comprises a single write head.

**3.** A head assembly as claimed in claim 1 wherein said read head means comprises a single read head.

**3.** A head assembly as claimed in claim 1 wherein said write head means comprises a single write head and wherein said read head means comprises a single read head.

**4.** A head assembly as claimed in claim 1 wherein said read head means comprises first and second read heads, in registry along said direction perpendicular to said transport direction, each of said first and second read heads having a width which is less than one-half of the width of a data track, said first and second read heads being disposed on opposite sides of said center line of said read head means.

**5.** A head assembly as claimed in claim 1 wherein said read head means comprises first and second read heads each having a width less than half of a width of a data track and being disposed on opposite sides of said center line of said read head means, and being offset from said write head means in said transport direction.

**6.** A head assembly as claimed in claim 1 wherein said write head means and said read head means are aligned in said direction perpendicular to said transport direction.

**7.** A head assembly as claimed in claim 1 wherein said write head means comprises first and second write heads and wherein said read head means comprises first and second read heads, said first read head being offset in said transport direction with respect to said first write head for detecting overwriting of data by said first write head on said adjacent data track, and said second read head being offset in said transport direction from said second read head for detecting overwriting of data by said second write head on said adjacent data track.

**8.** A head assembly as claimed in claim 1 wherein said write head means comprises a single write head and wherein said read head means comprises first and second read heads, said first and second read heads being disposed on opposite sides of said write head in a direction parallel to said transport direction, for respectively detecting overwriting of data by said write head on said adjacent data track in said transport direction and in a direction opposite to said transport direction.

**9.** A head assembly as claimed in claim 1 further comprising an additional read head means, having a center line substantially coinciding with said center line of said write head means, for verifying recording of data by said write head means in said data track in which data is currently being recorded.

**10.** A head assembly as claimed in claim 1 wherein said write head means comprises first and second write heads and wherein said read head means comprises first and second read heads, said first read head being offset in said transport direction from said first write head for detecting overwriting of data by said first write head on said adjacent data track, and said second read head being offset from said second write head in said transport direction for detecting overwriting of data by said second read head on said adjacent data track, and said head assembly further comprising third and fourth read heads, said third read head having a center line substantially coincident with said center line of said write head means and being disposed between said first and second write heads in tape transport direction, and said fourth read head having a center line substantially coincident with said center line of said write head means and being disposed following said second write head in said transport direction, said third and fourth read heads forming means for respectively verifying recording of data by said first data track in which data is currently being written.

**11.** A head assembly as claimed in claim 1 wherein said write head means comprises a single write head and wherein said read head means comprises first and second read heads disposed on opposite sides of said write head for respectively detecting overwriting of data by said write head on said adjacent data track in said transport direction and in a direction opposite to said transport direction, and said head assembly further comprising third and fourth read heads each having a center line substantially coincident with said center line of said write head and being disposed on opposite sides of said write head, said third and fourth read heads forming means for respectively verifying recording of data by said write head, in said data track in which data is currently being written, in said transport direction and in said direction opposite to said transport direction.

**12.** A head assembly for use in a system for recording data on a data storage medium in a plurality of successively recorded, adjacent data tracks and for reading the recorded data from said data storage medium, said head assembly and said data storage medium being movable relative to each other in successive passes along a transport direction substantially parallel to said data tracks, said head assembly comprising:
a carrier;
write head means, mounted on said carrier and having a center line extending substantially parallel to said transport direction, for recording said data on said storage medium; and
read head means, mounted on said carrier, for verifying data in a pass being currently written in a first data track in the same pass by said write head means and for substantially simultaneously, in the same pass, detecting overwriting of data by said write head means on a second data track which is adjacent said first data track.

**13.** A head assembly as claimed in claim 12 wherein said write head means comprises a single write head.

**14.** A head assembly as claimed in claim 12 wherein said read head means includes first and second read heads, in registry along said direction perpendicular to said transport direction, each of said first and second read heads having a width which is less than one-half of the width of a data track, said first and second read heads being disposed on opposite sides of said center line of said read head means for detecting said overwriting.

**15.** A head assembly as claimed in claim 12 wherein said write head means comprises a single write head, and wherein said read head means comprises a first read head disposed offset from said write head in said transport direction and having a width substantially coextensive with a width of a data track for verifying recording of data by said write head in said data track in which said data is currently being recorded, and a second read head disposed substantially in alignment with said right head in said direction perpendicular to said transport direction and having a width which is less than said width of a data track for detecting said overwriting.

**16.** A head assembly as claimed in claim 12 wherein said read head means includes first and second read heads each having a width less than half of a width of a data track and being disposed on opposite sides of said center line of said read head means, and being offset from said write head means in said transport direction.

**17.** A head assembly as claimed in claim 12 wherein said write head means includes first and second write heads and wherein said read head means comprises first and second read heads, said first read head being offset in said transport direction with respect to said first write head for detecting overwriting of data by said first write head on said adjacent data track, and said second read head being offset in said transport direction from said second read head for detecting overwriting of data by said second write head on said adjacent data track.

**18.** A head assembly as claimed in claim 12 wherein said write head means includes a single write head and wherein said read head means comprises first and second read heads, said first and second read heads being disposed on opposite sides of said write head in a direction parallel to said transport direction, for respectively detecting overwriting of data by said write head on said adjacent data track in said transport direction and in a direction opposite to said transport direction.

**19.** A head assembly as claimed in claim 12 wherein said write head means comprises first and second write heads and wherein said read head means comprises first, second, third and fourth read heads, said first read head being offset in said transport direction from said first write head for detecting overwriting of data by said first write head on said adjacent data track, said second read head being offset from said second write head in said transport direction for detecting overwriting of data by said second read head on said adjacent data track, said third read head having a center line substantially coincident with said center line of said right head means and being disposed between said first and second write heads in said transport direction, and said fourth read having a center line substantially coincident with said center line of said write head means and being disposed following said second write head in said transport direction, said third and fourth read heads respectively verifying recording of data by said first and second write heads in said data track in which data is currently being written.

**20.** A head assembly as claimed in claim 12 wherein said write head means comprises a single write head and wherein read head means comprises first, second, third and fourth read heads, said first and second read heads disposed on opposite sides of said write head for respectively detecting overwriting of data by said write head on said adjacent data track in said transport direction and in a direction opposite to said transport direction, and said third and fourth read heads each having a center line substantially coincident with said center line of said write head and being disposed on opposite sides of said write head for verifying recording of data by said write head, in said data track in which data is currently being written, in said transport direction and in said direction opposite to said transport direction.

**21.** A head assembly for use in a system for recording data on a data storage medium in a plurality of successively recorded, adjacent data tracks and for reading the recorded data from said data storage medium, said head assembly and said data storage medium being movable relative to each other in successive passes along first and second coinciding but oppositely directed transport directions substantially parallel to said data tracks, said head assembly comprising:
a carrier;
write head means, mounted on said carrier, for selectively writing said data on said storage medium in a pass in either of said transport directions; and
read head means, mounted on said carrier, for selectively verifying data in a pass in either of said transport directions being currently written in a first data track in the same pass by said write head means and for substantially simultaneously in the same pass selectively detecting overwriting of data in either of said transport directions by said write head means on a second data track which is adjacent said first data track.

**22.** A head assembly as claimed in claim 21 wherein said write head means comprises a single write head.

**23.** A head assembly as claimed in claim 21 wherein said read head means includes first and second read heads, in registry along said direction perpendicular to said transport direction, each of said first and second read heads having a width which is less than one-half of the width of a data track, said first and second read heads being disposed on opposite sides of said center line of said read head means for detecting said overwriting.

**24.** A head assembly as claimed in claim 21 wherein said write head means comprises a single write head, and wherein said read head means comprises a first read head disposed offset from said write head in said transport direction and having a width substantially coextensive with a width of a data track for verifying recording of data by said write head in said data track in which said data is currently being recorded, and a second read head disposed substantially in alignment with said right head in said direction perpendicular to said transport direction and having a width which is less than said width of a data track for detecting said overwriting.

**25.** A head assembly as claimed in claim 21 wherein said read head means includes first and second read heads each having a width less than half of a width of a data track and being disposed on opposite sides of said center line of said read head means, and being offset from said write head means in said transport direction.

**26.** A head assembly as claimed in claim 21 wherein said write head means includes first and second write heads and wherein said read head means comprises first and second read heads, said first read head being offset in said transport direction with respect to said first write head for detecting overwriting of data by said first write head on said adjacent data track, and said second read head being offset in said transport direction from said second read head for detecting overwriting of data by said second write head on said adjacent data track.

**27.** A head assembly as claimed in claim 21 wherein said write head means includes a single write head and wherein said read head means comprises first and second read heads, said first and second read heads being disposed on opposite sides of said write head in a direction parallel to said transport direction, for respectively detecting overwriting of data by said write head on said adjacent data track in said transport direction and in said direction opposite to said transport direction.

**28.** A head assembly as claimed in claim 21 wherein said write head means comprises first and second write heads and wherein said read head means comprises first, second, third and fourth read heads, said first read head being offset in said transport direction from said first write head for detecting overwriting of data by said first write head on said adjacent data track, said second read head being offset from said second write head in said transport direction for detecting overwriting of data by said second read head on said adjacent data track, said third read head having a center line substantially coincident with said center line of said right head means and being disposed between said first and second write heads in said transport direction, and said fourth read having a center line substantially coincident with said center line of said write head means and being disposed following said second write head in said transport direction, said third and fourth read heads respectively verifying recording of data by said first and second write heads in said data track in which data is currently being written.

**29.** A head assembly as claimed in claim 21 wherein said write head means comprises a single write head and wherein read head means comprises first, second, third and fourth read heads, said first and second read heads disposed on opposite sides of said write head for respectively detecting overwriting of data by said write head on said adjacent data track in said transport direction and in said direction opposite to said transport direction, and said third and fourth read heads each having a center line substantially coincident with said center line of said write head and being disposed on opposite sides of said write head for verifying recording of data by said write head, in said data track in which data is currently being written, in said transport direction and in said direction opposite to said transport direction.
